# EUROPEAN PATENT SPECIFICATION

(11) **EP 3 183 144 B1**
(45) Date of publication and mention of the grant of the patent: **10.10.2018**
(21) Application number: 15766644.7
(22) Date of filing: 20.08.2015
(51) Int. Cl.: B60T 11/21, B60T 13/68

(54) **BRAKING SYSTEM FOR AGRICULTURAL VEHICLES OR THE LIKE AND MANUFACTURING METHOD THEREOF**
BREMSSYSTEM FÜR LANDWIRTSCHAFTLICHE FAHRZEUGE ODER DERGLEICHEN UND HERSTELLUNGSVERFAHREN DAFÜR
SYSTÈME DE FREINAGE POUR VÉHICULES AGRICOLES OU SIMILAIRES ET PROCÉDÉ DE FABRICATION ASSOCIÉ

(30) Priority: 20.08.2014 IT TO20140673
(43) Date of publication of application: 28.06.2017
(73) Proprietor: VHIT S.p.A., 26010 Offanengo (CR) (IT)
(72) Inventor: CADEDDU, Leonardo, I-26010 Offanengo (CR) (IT)
(74) Representative: Bee, Joachim
(86) International application number: PCT/IB2015/056314
(87) International publication number: WO 2016/027242

(56) References cited:
- EP-A1- 2 216 219
- WO-A1-2006/103049
- DE-A1- 10 145 789
- DE-U1- 9 206 185
- GB-A- 1 163 723

## Description

### Technical field

The present invention generally relates to a braking system for agricultural (or farm) vehicles or the like.

More particularly, the present invention relates to a hydraulic braking system equipped with safety functions arranged to operate on the braking members of vehicles of such kind.

### Prior Art

In the last years, also vehicles such as agricultural tractors and the like, especially those capable of attaining relatively high speeds, have started being equipped with safety functions based on interventions on the braking members of the vehicle. Among those functions, the one most familiar also to laymen is the Anti-lock Braking System, commonly known with the acronym ABS.

Other known safety functions are for instance the Acceleration Slip Regulation (ASR), the stability control or Electronic Stability Program (ESP), and so on.

Further known functions, especially for agricultural vehicles to which reference will preferably be made hereinafter for the sake of convenience of the description, are for instance ancillary functions also requiring interventions on the braking members, such as for instance the Steer-by-Braking Function (SBF).

Document DE 9206185U1 discloses a hydraulic braking system for agricultural tractors comprising a first and a second master cylinder, actuated by means of respective pedals, and an ABS. The system further comprises valves arranged to activate the ABS when both pedals are actuated, and to deactivate it when a single pedal is actuated (steer-by-braking). The system uses a single fluid both in the braking members and in the master cylinders and the ABS.

As known, in many agricultural vehicles or the like, the braking equipment or system makes use, generally for cost reduction reasons, of a mineral fluid in order to operate the braking members. In these cases, in particular, conventional hydraulic ABS systems designed for operating with non-mineral brake liquid (of DOT 3, 4, 5 type) cannot be used, since, as known to the persons skilled in the art, mineral oil would damage the hydraulic ABS that includes a hydraulic control unit operating with brake liquid and not with mineral oil.

Document WO 2014/091349 in the name of the Applicant discloses a hydraulic braking system for agricultural tractors and the like, equipped with safety functions (ABS) and steer-by-braking functions (SBF) and arranged to operate with two incompatible fluids, a first fluid for activating braking and the safety and ancillary functions, and a second fluid for acting on the brakes.

In accordance with the prior art, the braking system has a single master cylinder (with single or double circuit) driven by a control rod, and braking control is performed by means of a hydraulic control unit controlled by an electronic control unit.

More particularly, in accordance with the prior art, functions such as the anti-lock braking (ABS) and the steer-by-braking (SBF) are entrusted to a software installed on the electronic control unit.

Generally speaking, the Applicant has noticed that the prior art braking systems, when they are configured so as to operate with two mutually incompatible fluids, necessarily require, in order to manage both the anti-lock braking system (ABS) and the steer-by-braking functions (SBF), the provision of a single master cylinder (with single or double circuit) operated by a single pedal, and of an electronic control unit.

A first problem found is that the provision of a single pedal is not particularly appreciated by people using agricultural vehicles.

A second problem found is that the need for an intervention of the electronic control unit may become a limit in case of electrical blackout in the vehicle.

### Description of the Invention

It is an object of the present invention to obviate the problems mentioned above of the prior art.

The object is achieved through the hydraulic braking system for agricultural vehicles or the like as claimed herein.

The present invention also relates to a method of making a braking system for agricultural vehicles or the like.

The claims are integral part of the technical teaching provided herein in respect of the invention.

The following synthetic description of the invention is given in order to provide a basic understanding of some aspects of the invention. This synthetic description is not an exhaustive description and, as such, it is not intended as being suitable for identifying key or critical elements of the invention, or suitable for defining the object of the invention. It only aims at setting forth some concepts of the invention in simplified form, as an anticipation of the detailed description included below.

In accordance with a feature of a preferred embodiment of the invention, the braking system includes an ABS and two master cylinders operated by respective pedals and fed with a first fluid, and brakes fed with a second fluid incompatible with the first one. The system is configured so that, if a single pedal is operated, intervention of the ABS is excluded and a steer-by-braking function or SBF is activated on the basis of a fluidic connection between a master cylinder and the respective brake, whereas, if both pedals are operated, the fluidic connection between the master cylinder and the respective brake is cut off and intervention of the ABS is activated.

In accordance with another feature of the invention, the fluidic connection between the master cylinders and the brakes is established by means of spool valves of the normally open type.

In accordance with a further feature of the invention, the master cylinders are either single-circuit or double-circuit cylinders, wherein, in case of double-circuit cylinders, they are hydraulically connected to the brakes either by axle or in an X configuration

### Brief Description of the Figures

The above and other features and advantages of the present invention will become apparent from the following description of preferred embodiments, made by way of non limiting example with reference to the accompanying drawings, in which elements denoted by a same or similar numerical reference correspond to components having the same or similar function and construction and in which:
- Fig. 1 shows a first embodiment of the present invention;
- Fig. 2 shows a second embodiment of the present invention; and
- Fig. 3 shows a third embodiment of the present invention.

### Description of Preferred Embodiments

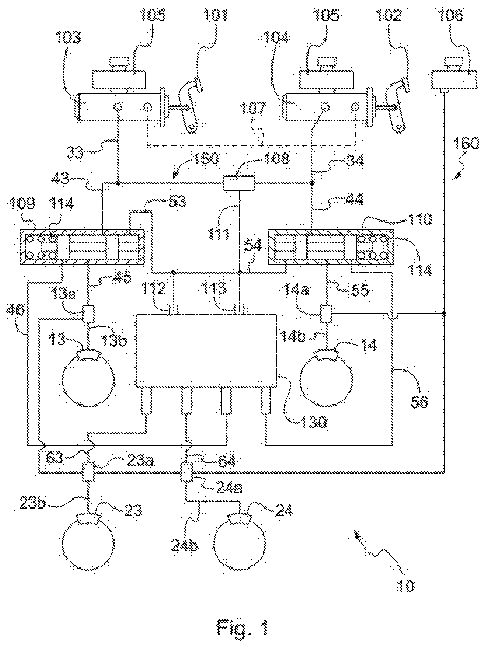

Referring to Fig. 1, there is shown a schematic diagram of the hydraulic part of a braking equipment or system 10 of an agricultural vehicle or the like (tractor), equipped with an anti-lock system or ABS 130, steer-by-braking devices or SBF and braking members or brakes.

In accordance with the present invention, use is made in the vehicle of two fluidic circuits 150 and 160, comprising two different and mutually incompatible fluids, for instance, brake fluid, e.g. glycol-based or silicone-based fluid, in the ABS, and a fluid of the mineral oil type in the braking members.

In the example shown in Fig. 1, braking system 10 includes a pair of pedals 101 and 102 acting on respective master cylinders 103 and 104 in order to actuate, for instance, braking on four brakes 13, 14, 23 and 24 associated with respective rear and front wheels of the vehicle. Pedals 101 and 102 may be actuated either individually or, if they are coupled through a lock, known per se, jointly.

Master cylinders 103 and 104, e.g. of the single-circuit type and arranged to control braking on the right and left sides, respectively, are preferably fed from a reservoir 105 containing brake fluid, for instance of "DOT" 3, 4 or 5 type. The reservoir is generally unique, but it is shown here by separate units for easiness of drawing,

Preferably the ABS is fed from reservoir 105 with the same brake fluid.

Brakes 13, 14, 23 and 24, in the example shown in Fig. 1, right and left rear brakes and right and left front brakes, respectively, are preferably fed from a reservoir 106 containing a mineral-based fluid, for instance of the "LHM" type.

In the preferred embodiment, the two master cylinders are connected together, in known manner, through balancing valves, for instance of the normally closed type, and a balancing duct 107.

In the example shown in Fig. 1, master cylinders 103 and 104 have respective outlets 33 and 34 including a first respective branch towards a logic head 108, of known type, and respective branches 43 and 44 towards two spool valves 109 and 110, respectively, they too of known type, which preferably are of the normally open type.

Logic head or control logic 108 has two inlets connected with outlets 33 and 34 from the master cylinders, and an outlet, formed by a duct 111, which branches towards two inlets 112 and 113 provided in ABS 130, and towards two further inlets 53 and 54 provided in spool valves 109 and 110. The latter include respective springs 114 configured so as to oppose in predetermined manner the state change of the spool valves from the normally open state to the closed state.

Each spool valve 109 or 110 further has a first outlet 45 or 55, respectively arranged to control braking, for instance on right or left rear brake 13 or 14, when only one of pedals 101 or 102 is actuated.

Each spool valve 109 or 110 also has a further inlet 46 or 56, respectively, connected with ABS 130 and arranged to control anti-lock braking under the control of the ABS when pedals 101 and 102 are jointly actuated.

ABS 130, of known type, is for instance an ABS with four outlet channels, namely channels 46 and 56 towards spool valves 109 and 110 and channels 63 and 64 towards the front brakes, respectively, and two inlet channels 112 and 113 controlled by logic head 108.

In accordance with the first embodiment, in order to enable use of two mutually incompatible fluids, outlets 45 and 55 from spool valves 109 and 110, respectively, and outlets 63 and 64 from the ABS are connected to respective relays of the bi-fluidic type (bi-fluidic relays) 13a, 14a, 23a, 24a, for instance of the kind disclosed in patent application WO 2014/091349 in the name of the Applicant. The relays are connected through respective outlet ducts 13b, 14b, 23b, 24b to right and left rear brakes 13 and 14 and to right and left front brakes 23 and 24 (if the latter are provided), respectively.

In accordance with the embodiment described, braking system 10 is fed with brake fluid, with the only exception of part of bi-fluidic relays 13a, 14a, 23a, 24a, of outlet ducts 13b, 14b, 23b, 24b of the bi-fluidic relays and of right and left rear brakes 13 and 14 and right and left front brakes 23 and 24, respectively, which on the contrary are fed with mineral-based fluid from reservoir 106.

The operation of the system shown in Fig. 1 is as follows.

Since the hydraulic outlet from master cylinders 103 and 104 is connected, through logic head 108, to spool valves 109 and 110, preferably of the normally open type, under idle conditions, i.e. when the logic head or control logic does not intervene, the master cylinders are connected to the respective bi-fluidic relays 13a and 14a and hence to brakes 13 and 14. This entails that, by separately actuating one of the two pedals, braking of the corresponding rear brake is performed, without any intervention of ABS 130.

Thus, in such a configuration, steer-by-braking function SBF is operative even in case of electrical blackout or failure in the ABS.

When pedals 101 and 102 are coupled together, in accordance with the preferred embodiment logic head or control logic 108 opens the connection towards outlet 111 branching towards the inlets of ABS 130 and at the same time, by overcoming the load of opposing springs 114, switches spool valves 109 and 110 from the normally open state to the closed state, whereby inlets 43 and 44 for the fluid coming from the master cylinders are cut off from the rear brakes and outlets 46, 56, 63, 64 of ABS 130 are connected to the respective bi-fluidic relays 13a, 14a, 23a, 24a controlling each individual brake.

In the case of rear brakes 13 and 14, preferably the fluid from outlets 46 and 56 from ABS 130 passes through the spool valves and comes out from ducts 45 and 55 towards bi-fluidic relays 13a and 14a.

As known to the skilled in the art, the ABS intervenes by cutting inlets 112 and 113 off from the respective outlets and by modulating the pressure(s) towards the brakes when one or more brakes tend to become locked.

If the brakes do not tend to become locked, the pressure generated by the master cylinders freely passes through the ABS towards the bi-fluidic relays and consequently to the brakes, and braking modulation only depends on the force exerted on the pedal.

Also in this situation, in case of electrical blackout braking is operative, of course without control by the ABS.

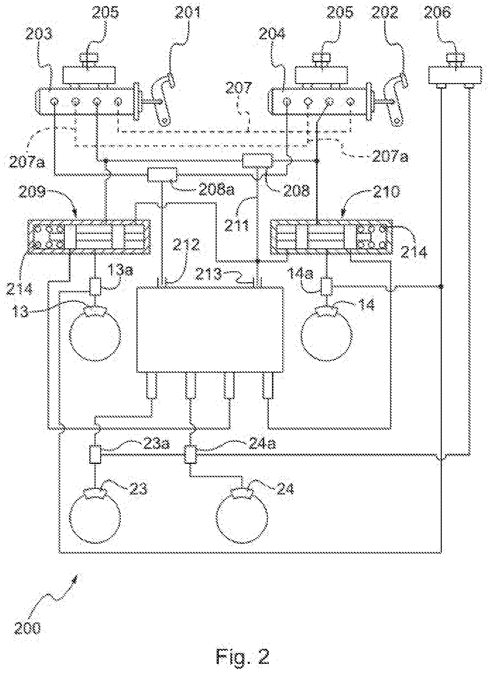

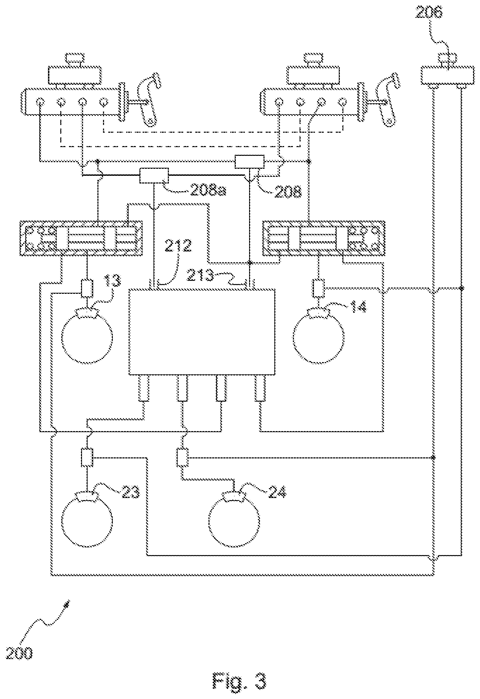

Figs. 2 and 3 show systems 200 representing variant embodiments of system 10 shown in Fig. 1. In all variants, front brakes are provided: yet, as it can be easily understood, such a provision is not strictly necessary for the invention as herein described.

In accordance with the second embodiment as shown in Fig. 2, where elements similar to those shown in Fig. 1 are denoted by similar numerical references, system 200 comprises master cylinders 203 and 204, for instance of the kind with a double circuit, a primary and a secondary circuit, which are fed with brake fluid from a double-chamber reservoir 205.

Also in this second embodiment rear brakes 13 and 14 and front brakes 23 and 24 are fed with a mineral-based fluid, for instance from a double-compartment reservoir 206, of known type.

In accordance with this embodiment, the two master cylinders are mutually connected through balancing valves, for instance of the normally closed type, and respective balancing ducts 207 and 207a.

Each of the two primary circuits of master cylinders 203 and 204 has a hydraulic outlet branching towards a first logic head 208 and towards respective spool valves 209 and 210, for instance of the normally open type, through which, when both spool valves are in rest conditions, each primary circuit of the master cylinders is connected with the respective bi-fluidic relay 13a and 14a controlling the rear brakes. Thus, by individually actuating one of the two pedals 201 and 202, braking of the corresponding rear brake 13 or 14 and of the corresponding rear wheel is performed.

Unlike braking system 10 with single-circuit master cylinders, system 200 includes two double-circuit master cylinders.

The system configured in this manner has two primary circuits having a hydraulic outlet branching towards the first logic head 208, and two secondary circuits having a hydraulic outlet branching towards a second logic head 208a.

Both master cylinders 203 and 204 are configured so that there are provided first (primary) pistons arranged to receive the force applied by pedals 201 and 202 in order to act only onto the rear brakes, and two secondary circuits configured so that second pistons are provided that are pushed by the pressure generated by the primary pistons or, if pressure is lacking because of a failure, directly from the primary pistons.

In accordance with the second embodiment, the two secondary circuits act on right and left front brakes 23 and 24, respectively, through logic head 208a and the ABS, only when both pedals are actuated.

Actually, when pedals 201 and 202 are coupled together, the first and second logic heads 208 and 208a open the connections towards outlets 211 and 212 branching towards the ABS inlets and, at the same time, by overcoming the load of opposing springs 114, switch spool valves 109 and 110, cut inlets for the fluid coming from the master cylinders off from the rear brakes and connect the ABS outlets to the respective bi-fluidic relays 13a, 14a, 23a, 24a in order to control each individual brake 13, 14, 23, 24.

In accordance with such an embodiment shown in Fig. 2, the hydraulic connections of front and rear brakes are denoted as connections by axle.

In accordance with the embodiment shown for instance in Fig. 3, the hydraulic connections of front and rear brakes are denoted as X-type connections.

In case of a functional loss of one of the two circuits of the master cylinders, either the rear wheels or the front wheels brake, if the wheels are connected by axle, as shown in Fig. 2.

If the hydraulic connections of the front and rear brakes are X-type connections, in case of a functional loss of one of the two circuits of the master cylinders, one rear wheel and one front wheel brake.

Under normal operation conditions, with the pedals coupled together, as known to the skilled in the art, the ABS intervenes by cutting inlets 212 and 213 off from the respective outlets and by modulating the pressure(s) towards the brakes through the respective bi-fluidic relays if one or more wheels tend to become locked.

If the wheels do not tend to become locked, the pressure generated by the master cylinders freely passes through the ABS towards the bi-fluidic relays and consequently towards brakes 13, 14, 23, 24 of all wheels.

## Claims

1. A braking system for farm vehicles or the like, comprising
- an anti-lock braking system or ABS (130) fed by a first fluidic circuit (150) containing a first fluid;
- at least a first rear brake (13) and a second rear brake (14) fed by a second fluidic circuit (160) containing a second fluid, said second fluid being incompatible with said first fluid;
- bi-fluidic relays connected between said ABS (130) and said at least a first rear brake and a second rear brake (13, 14) and arranged to interface said first fluidic circuit (150) with said second fluidic circuit (160);
**characterised in that** it comprises
- a first and a second braking pedal (101, 102, 201, 202) respectively connected to a first and a second master cylinder (103, 104, 203, 204), each cylinder being fed by said first fluidic circuit (150) and being arranged to activate braking by means of said at least a first and/or a second rear brake (13, 14);
- a first and a second spool valve (109, 110, 209, 210) respectively connected to said first and second master cylinder (103, 104, 203, 204);
- at least one logic control device (108, 208, 208a) connected to said master cylinders, to said spool valves (109, 110, 209, 210) and to said ABS (130) and arranged to operate so that:
- if a single pedal (101, 102, 201, 202) is actuated, the intervention of the ABS (130) is excluded and a steer-by-braking function, or SBF, is activated on the basis of the connection between the master cylinder and the respective brake through the respective spool valve (109, 110, 209, 210); and
- if both pedals (101, 102, 201, 202) are actuated, the intervention of the spool valves (109, 110, 209, 210) is excluded and the ABS intervention is activated on the basis of the connection between the master cylinders and the ABS.

2. The hydraulic braking system according to claim 1, wherein said first and second spool valves (109, 110, 209, 210) are normally open valves.

3. The hydraulic braking system according to any one of claims 1 to 2, wherein said first fluid is a glycol-based or silicone-based brake fluid.

4. The hydraulic braking system according to any one of claims 1 to 3, wherein said second fluid is a mineral-based fluid.

5. The hydraulic braking system according to any one of claims 1 to 4, wherein said master cylinders are single-circuit master cylinders.

6. The hydraulic braking system according to any one of claims 1 to 4, further comprising front brakes (23, 24), and **characterized in that** said master cylinders are double-circuit master cylinders including a primary and a secondary circuit;
- said primary circuit being arranged to activate braking by means of said first and second rear brake (13, 14);
- said secondary circuit being arranged to activate braking by means of said front brakes (23, 24).

7. The hydraulic braking system according to any one of claims 1 to 4, further comprising a first and a second front brake (23, 24), and **characterised in that** said master cylinders are double-circuit master cylinders including a primary and a secondary circuit;
- said primary circuit being arranged to activate braking by means of said first rear brake (13) and a first one of said front brakes;
- said secondary circuit being arranged to activate braking by means of said second rear brake (14) and a second one of said front brakes (23, 24).

8. A method of making a braking system for farm vehicles or the like, in which there are provided an anti-lock braking system or ABS (130) fed by a first fluidic circuit (150) containing a first fluid, and at least a first rear brake (13) and a second rear brake (14) fed by a second fluidic circuit (160) containing a second fluid, said second fluid being incompatible with said first fluid;
said method comprising the steps of:
- providing a first and a second master cylinder (103, 104, 203, 204) individually or jointly actuatable, each cylinder being fed by said first fluidic circuit (150) and being arranged to activate braking by means of said at least a first and/or a second rear brake (13, 14);
- providing a first and a second spool valve (109, 110, 209, 210) connected to said first and second master cylinder (103, 104, 203, 204), respectively;
- providing at least one logic control device (108, 208, 208a) connected to said ABS (130) and to said first and second spool valve (109, 110, 209, 210) and arranged:
- if only one master cylinder is actuated, to exclude the intervention of the ABS (130) and to activate a steer-by-braking function or SBF on the basis of the connection between the master cylinder and the respective brake through the respective spool valve (109, 110, 209, 210); and
- if both master cylinders are actuated, to exclude the intervention of the spool valves (109, 110, 209, 210) and to activate the ABS intervention on the basis of the connection between the master cylinders and the ABS.

9. The method according to claim 8, wherein the step of providing a first and a second master cylinder (103, 104, 203, 204) comprises the step of alternatively providing:
- single-circuit master cylinders; or
- double-circuit master cylinders including a primary and a secondary circuit.

## Patentansprüche

1. Bremssystem für landwirtschaftliche Fahrzeuge oder Ähnliches, das Folgendes umfasst:
- ein Antiblockierbremssystem bzw. ABS (130), das durch einen ersten Flüssigkeitskreislauf (150) gespeist wird, der eine erste Flüssigkeit enthält;
- mindestens eine erste hintere Bremse (13) und eine zweite hintere Bremse (14), die durch einen zweiten Flüssigkeitskreislauf (160) gespeist werden, der eine zweite Flüssigkeit enthält, wobei die zweite Flüssigkeit mit der ersten Flüssigkeit unverträglich ist;
- Relaisventile mit zwei Flüssigkeiten, die zwischen dem ABS (130) und der mindestens einen ersten hinteren Bremse und einen zweiten hinteren Bremse (13, 14) verbunden und angeordnet sind, den ersten Flüssigkeitskreislauf (150) mit dem zweiten Flüssigkeitskreislauf (160) zu koppeln;
**dadurch gekennzeichnet, dass** es umfasst:
- ein erstes und ein zweites Bremspedal (101, 102, 201, 202), die jeweils mit einem ersten und einem zweiten Hauptzylinder (103, 104, 203, 204) verbunden sind, wobei jeder Zylinder durch den ersten Flüssigkeitskreislauf (150) gespeist wird und angeordnet ist, ein Bremsen mithilfe der mindestens einen ersten und/oder einen zweiten hinteren Bremse (13, 14) zu aktivieren;
- ein erstes und ein zweites Schieberventil (109, 110, 209, 210), die jeweils mit dem ersten und zweiten Hauptzylinder (103, 104, 203, 204) verbunden sind;
- mindestens eine logische Steuervorrichtung (108, 208, 208a), die mit den Hauptzylindern, mit den Schieberventilen (109, 110, 209, 210) und mit dem ABS (130) verbunden und angeordnet ist, derart betreibbar zu sein, dass:
- wenn ein einzelnes Pedal (101, 102, 201, 202) betätigt wird, der Eingriff des ABS (130) ausgeschlossen ist und eine Lenkung-durch-Bremsen-Funktion, oder SBF (Steer-By-Braking Function), auf der Basis der Verbindung zwischen dem Hauptzylinder und der jeweiligen Bremse durch das jeweilige Schieberventil (109, 110, 209, 210) aktiviert wird; und
- wenn beide Pedale (101, 102, 201, 202) betätigt werden, der Eingriff der Schieberventile (109, 110, 209, 210) ausgeschlossen ist und der ABS-Eingriff auf der Basis der Verbindung zwischen den Hauptzylindern und dem ABS aktiviert wird.

2. Hydraulikbremssystem nach Anspruch 1, wobei die ersten und zweiten Schieberventile (109, 110, 209, 210) normal-geöffnete Ventile sind.

3. Hydraulikbremssystem nach einem der Ansprüche 1 bis 2, wobei die erste Flüssigkeit eine glykolbasierte oder silikon-basierte Bremsflüssigkeit ist.

4. Hydraulikbremssystem nach einem der Ansprüche 1 bis 3, wobei die zweite Flüssigkeit eine mineralbasierte Flüssigkeit ist.

5. Hydraulikbremssystem nach einem der Ansprüche 1 bis 4, wobei die Hauptzylinder Einkreis-Hauptzylinder sind.

6. Hydraulikbremssystem nach einem der Ansprüche 1 bis 4, ferner umfassend vordere Bremsen (23, 24), und **dadurch gekennzeichnet, dass** die Hauptzylinder Zweikreis-Hauptzylinder mit einem primären und einem sekundären Kreislauf sind;
- wobei der primäre Kreislauf angeordnet ist, um ein Bremsen mithilfe der ersten und zweiten hinteren Bremse (13, 14) zu aktivieren;
- wobei der sekundäre Kreislauf angeordnet ist, um ein Bremsen mithilfe der vorderen Bremsen (23, 24) zu aktivieren.

7. Hydraulikbremssystem nach einem der Ansprüche 1 bis 4, ferner umfassend eine erste und eine zweite vordere Bremse (23, 24), und **dadurch gekennzeichnet, dass** die Hauptzylinder Zweikreis-Hauptzylinder mit einem primären und einem sekundären Kreislauf sind;
- wobei der primäre Kreislauf angeordnet ist, um ein Bremsen mithilfe der ersten hinteren Bremse (13) und einer ersten der vorderen Bremsen zu aktivieren;
- wobei der sekundäre Kreislauf angeordnet ist, um ein Bremsen mithilfe der zweiten hinteren Bremse (14) und einer zweiten der vorderen Bremsen (23, 24) zu aktivieren.

8. Verfahren zum Herstellen eines Bremssystems für landwirtschaftliche Fahrzeuge oder Ähnliches, in dem ein Antiblockierbremssystem bzw. ABS (130), das durch einen ersten Flüssigkeitskreislauf (150) gespeist wird, der eine erste Flüssigkeit enthält, und mindestens eine erste hintere Bremse (13) und eine zweite hintere Bremse (14), die durch einen zweiten Flüssigkeitskreislauf (160) gespeist werden, der eine zweite Flüssigkeit enthält, bereitgestellt sind, wobei die zweite Flüssigkeit mit der ersten Flüssigkeit unverträglich ist;
wobei das Verfahren die folgenden Schritte umfasst:
- Bereitstellen eines ersten und eines zweiten Hauptzylinders (103, 104, 203, 204), die einzeln und gemeinsam betätigbar sind, wobei jeder Zylinder durch den ersten Flüssigkeitskreislauf (150) gespeist wird und angeordnet ist, ein Bremsen mithilfe der mindestens einen ersten und/oder einen zweiten hinteren Bremse (13, 14) zu aktivieren;
- Bereitstellen eines ersten und eines zweiten Schieberventils (109, 110, 209, 210), die jeweils mit dem ersten und zweiten Hauptzylinder (103, 104, 203, 204) verbunden sind;
- Bereitstellen mindestens einer logischen Steuervorrichtung (108, 208, 208a), die mit dem ABS (130) und mit dem ersten und zweiten Schieberventil (109, 110, 209, 210) verbunden ist und zu Folgendem angeordnet ist:
- wenn nur ein Hauptzylinder betätigt wird, den Eingriff des ABS (130) auszuschließen und eine Lenkung-durch-Bremsen-Funktion oder SBF auf der Basis der Verbindung zwischen dem Hauptzylinder und der jeweiligen Bremse durch das jeweilige Schieberventil (109, 110, 209, 210) zu aktivieren; und
- wenn beide Hauptzylinder betätigt werden, den Eingriff der Schieberventile (109, 110, 209, 210) auszuschließen und den ABS-Eingriff auf der Basis der Verbindung zwischen den Hauptzylindern und dem ABS zu aktivieren.

9. Verfahren nach Anspruch 8, wobei der Schritt des Bereitstellens eines ersten und eines zweiten Hauptzylinders (103, 104, 203, 204) den Schritt eines alternativen Bereitstellens von Folgendem umfasst:
- Einkreis-Hauptzylindern; oder
- Zweikreis-Hauptzylindern mit einem primären und einem sekundären Kreislauf.

## Revendications

1. Système de freinage pour véhicules agricoles ou similaires, comprenant
- un système de freinage antiblocage ou ABS (130) alimenté par un premier circuit fluidique (150) contenant un premier fluide ;
- au moins un premier frein arrière (13) et un second frein arrière (14) alimentés par un second circuit fluidique (160) contenant un second fluide, ledit second fluide étant incompatible avec ledit premier fluide ;
- des relais bi-fluidiques connectés entre ledit ABS (130) et lesdits au moins premier frein arrière et au moins second frein arrière (13, 14) et conçus pour servir d'interface entre ledit premier circuit fluidique (150) et ledit second circuit fluidique (160) ;
**caractérisé en ce qu'**il comprend
- une première et une seconde pédale de freinage (101, 102, 201, 202) reliées respectivement à un premier et à un second maître-cylindre (103, 104, 203, 204), chaque cylindre étant alimenté par ledit premier circuit fluidique (150) et étant conçu pour activer le freinage au moyen dudit premier et/ou second frein arrière (13, 14) ;
- un premier et un second distributeur à tiroir (109, 110, 209, 210) reliés respectivement audit premier et audit second maître-cylindre (103, 104, 203, 204) ;
- au moins un dispositif de commande logique (108, 208, 208a) relié auxdits maîtres-cylindres, auxdits distributeurs à tiroir (109, 110, 209, 210) et audit ABS (130) et conçu pour fonctionner de sorte que :
- si une seule pédale (101, 102, 201, 202) est actionnée, l'intervention de l'ABS (130) soit exclue et une fonction de direction par freinage, ou SBF, soit activée en fonction du raccordement entre le maître-cylindre et le frein respectif à travers le distributeur à tiroir respectif (109, 110, 209, 210) ; et
- si les deux pédales (101, 102, 201, 202) sont actionnées, l'intervention des distributeurs à tiroir (109, 110, 209, 210) soit exclue et l'intervention de l'ABS soit activée en fonction du raccordement entre les maîtres-cylindres et l'ABS.

2. Système de freinage hydraulique selon la revendication 1, lesdits premier et second distributeurs à tiroir (109, 110, 209, 210) étant des distributeurs normalement ouverts.

3. Système de freinage hydraulique selon la revendication 1 ou 2, ledit premier fluide étant un liquide de freinage à base de glycol ou de silicone.

4. Système de freinage hydraulique selon l'une quelconque des revendications 1 à 3, ledit second fluide étant un liquide à base minérale.

5. Système de freinage hydraulique selon l'une quelconque des revendications 1 à 4, lesdits maîtres-cylindres étant des maîtres-cylindres à circuit unique.

6. Système de freinage hydraulique selon l'une quelconque des revendications 1 à 4, comprenant en outre des freins avant (23, 24), et **caractérisé en ce que** lesdits maîtres-cylindres sont des maîtres-cylindres à double circuit comprenant un circuit primaire et un circuit secondaire ;
- ledit circuit primaire étant conçu pour activer le freinage au moyen desdits premier et second freins arrière (13, 14) ;
- ledit circuit secondaire étant conçu pour activer le freinage au moyen desdits freins avant (23, 24).

7. Système de freinage hydraulique selon l'une quelconque des revendications 1 à 4, comprenant en outre un premier et un second frein avant (23, 24), et **caractérisé en ce que** lesdits maîtres-cylindres sont des maîtres-cylindres à double circuit comprenant un circuit primaire et un circuit secondaire ;
- ledit circuit primaire étant conçu pour activer le freinage au moyen dudit premier frein arrière (13) et d'un premier desdits freins avant ;
- ledit circuit secondaire étant conçu pour activer le freinage au moyen dudit second frein arrière (14) et d'un second desdits freins avant (23, 24).

8. Procédé de fabrication d'un système de freinage pour véhicules agricoles ou similaires, comprenant un système de freinage antiblocage ou ABS (130) alimenté par un premier circuit fluidique (150) contenant un premier fluide, et au moins un premier frein arrière (13) et un second frein arrière (14) alimentés par un second circuit fluidique (160) contenant un second fluide, ledit second fluide étant incompatible avec ledit premier fluide ; ledit procédé comprenant les étapes consistant à :
- fournir un premier et un second maître-cylindre (103, 104, 203, 204) actionnables individuellement ou conjointement, chaque cylindre étant alimenté par ledit premier circuit fluidique (150) et étant conçu pour activer le freinage au moyen dudit au moins premier et/ou second frein arrière (13, 14) ;
- fournir un premier et un second distributeur à tiroir (109, 110, 209, 210) reliés audit premier et audit second maître-cylindre (103, 104, 203, 204), respectivement ;
- fournir au moins un dispositif de commande logique (108, 208, 208a) relié audit ABS (130) et auxdits premier et second distributeurs à tiroir (109, 110, 209, 210) et conçu :
- si un seul maître-cylindre est actionné, pour exclure l'intervention de l'ABS (130) et activer une fonction de direction par freinage ou SBF en fonction du raccordement entre le maître-cylindre et le frein respectif à travers le distributeur à tiroir (109, 110, 209, 210) respectif ; et
- si les deux maîtres-cylindres sont actionnés, pour exclure l'intervention des distributeurs à tiroir (109, 110, 209, 210) et activer l'intervention de l'ABS en fonction du raccordement entre les maîtres-cylindres et l'ABS.

9. Procédé selon la revendication 8, la fourniture d'un premier et d'un second maître-cylindre (103, 104, 203, 204) comprenant l'étape consistant à fournir en variante :
- des maîtres-cylindres à simple circuit ; ou
- des maîtres-cylindres à double circuit comprenant un circuit primaire et un circuit secondaire.
